# EUROPEAN PATENT APPLICATION

(11) **EP 2 818 911 A1**
(43) Date of publication of application: **31.12.2014**
(21) Application number: 13197945.2
(22) Date of filing: 18.12.2013
(51) Int. Cl.: G02F 1/1335

(54) **Color filter substrate, method for fabricating the same, and display panel**

(30) Priority: 28.06.2013 CN 201310270877
(71) Applicant: Shanghai Tianma Micro-electronics Co., Ltd., Pudong New District Shanghai 201201 (CN); Tianma Micro-Electronics Co., Ltd., 518052 Shenzhen (CN)
(72) Inventor: Lu, Feng, 201201 Shanghai (CN); Ma, Jun, 201201 Shanghai (CN); Zeng, Zhanghe, 201201 Shanghai (CN)
(74) Representative: Dantz, Jan Henning

(57) **Abstract**

A color filter substrate is disclosed. The color filter substrate includes a first substrate, a first conductive film layer formed on the first substrate, and an RGB color blocking layer formed on the first conductive film layer, where a first via hole is disposed in the RGB color blocking layer. The color filter substrate also includes a first insulating layer formed on the RGB color blocking layer, where a second via hole is disposed in the first insulating layer, and a second conductive film layer formed on the first insulating layer, where the first conductive film layer is electrically connected to the second conductive film layer through the first via hole and the second via hole.

## Description

### Field of the Invention

The present invention relates to the field of fabricating a display panel and particularly to a color filter substrate, a method for fabricating the same, and a display panel.

### Background of the Invention

At present, a color filter substrate of a display panel with an inbuilt touch function typically includes a substrate 1, a black matrix 2, a first conductive film layer 3, an RGB (Red, Green, Blue) color blocking layer 4 and a second conductive film layer 5.

The black matrix 2 is located on the substrate 1; the first conductive film layer 3 is located on the black matrix 2; the RGB color blocking layer 4 is located on the first conductive film layer 3; and the second conductive film layer 5 is located on the RGB color blocking layer 4.

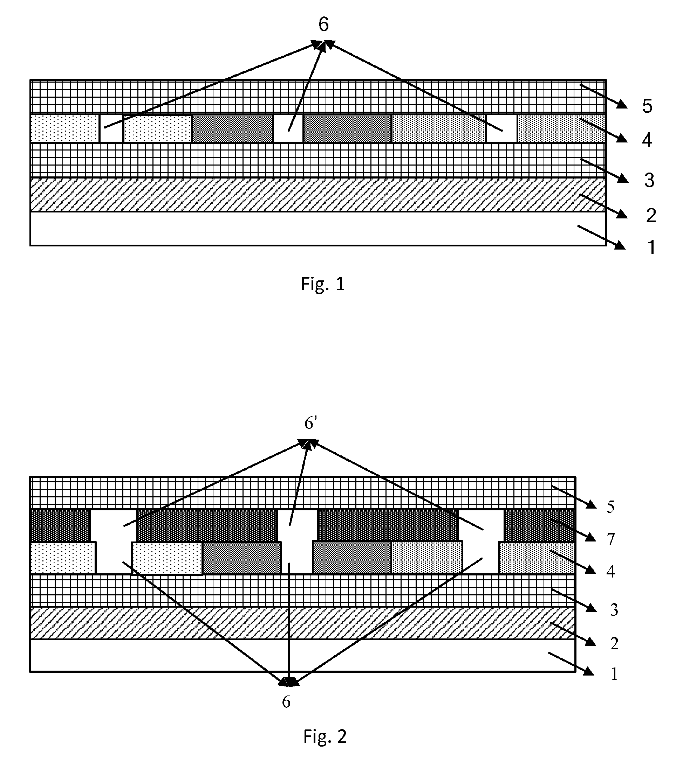

As apparent from a schematic structural diagram of the color filter substrate as illustrated in Fig. 1, the RGB color blocking layer 4 is located between the first conductive film layer 3 and the second conductive film layer 5, and in a process of fabricating the color filter substrate, after the RGB color blocking layer 4 is prepared, the second conductive film layer 5 is formed on the RGB color blocking layer 4 in a film plating process (e.g., physical deposition, etc.), and in this case, the film plating process and a subsequent etching process are performed on the RGB color blocking layer 4 in a process of fabricating the second conductive film layer 5, and a reagent, a conductive substance, etc., used in the film plating process and the etching process tend to cause a color difference of the RGB color blocking layer 4. Furthermore, in the process of fabricating the second conductive film layer 5, a conductive thin film layer is deposited on the RGB color blocking layer 4, and a layer of photo-resist is coated on the conductive thin film layer, and then the conductive thin film layer is etched through wet etching into a desired pattern, and next the photo-resist is stripped. Since the material of the RGB color blocking layer 4 is approximate to the material of the photo-resist, so stripping of the photo-resist in fabrication of the second conductive film layer 5 might damage the RGB color blocking layer 4, that is, strip the RGB color blocking layer 4. Moreover, the distance between the first conductive film layer 3 and the second conductive film layer 5 in the color filter substrate is small, thus increasing a parasitic capacitance between the two conductive thin film layers, lowering a signal to noise ratio of a display panel, with an inbuilt touch function, to which the color filter substrate is applied, and increasing power consumption of the display panel, with an inbuilt touch function, to which the color filter substrate is applied.

In summary, in the prior art, the signal to noise ratio of the display panel with an inbuilt touch function is low, thus increasing power consumption of the display panel; moreover, in the process of fabricating the color filter substrate of the display panel with an inbuilt touch function, a color difference of the RGB color blocking layer 4 or stripping of the RGB color blocking layer 4 may easily occur, thereby lowering the quality of presenting a picture on the display panel.

### Summary of the Invention

Embodiments of the invention provide a color filter substrate, a method for fabricating the same, and a display panel so as to address the problems in the prior art that the signal to noise ratio is low and the power consumption is high for an embedded touch display panel and that in the process of fabricating the color filter substrate of the embedded touch display panel, a color difference of the RGB color blocking layer or stripping of the RGB color blocking layer may degrade the quality of presenting a picture on the display panel.

The technical solutions of the embodiments of the invention are as follows.

A color filter substrate includes: a first substrate; a first conductive film layer formed on the first substrate; an RGB color blocking layer formed on the first conductive film layer, wherein a first via hole is provided in the RGB color blocking layer; a first insulating layer formed on the RGB color blocking layer, wherein a second via hole is provided in the first insulating layer; and a second conductive film layer formed on the first insulating layer, wherein the first conductive film layer is electrically connected to the second conductive film layer through the first via hole and the second via hole.

A display panel includes the color filter substrate described above.

A method for fabricating a color filter substrate includes: forming a first conductive film layer on a first substrate; forming an RGB color blocking layer on the first conductive film layer, wherein a first via hole is provided in the RGB color blocking layer; forming a first insulating layer on the RGB color blocking layer, wherein a second via hole is provided in the first insulating layer; and forming a second conductive film layer on the first insulating layer, wherein the first conductive film layer is electrically connected to the second conductive film layer through the first via hole and the second via hole.

In the embodiments of the invention, the first insulating layer is provided between the RGB color blocking layer and the second conductive film layer in the color filter substrate, thereby increasing the distance between the first conductive film layer and the second conductive film layer, and this structure effectively lowers a parasitic capacitance of the color filter substrate and improves a signal to noise ratio of the embedded touch display panel, to which the color filter substrate is applied; and in a process of fabricating the color filter substrate, the first insulating layer can prevent effectively a conductive substance and a photo-resist stripping liquid from damaging the RGB color blocking layer in fabrication of the second conductive film layer, thereby eliminating a color difference, a damage, etc., of the RGB color blocking layer in the resulting color filter substrate and ensuring effectively the quality of presenting a picture on the embedded touch display panel, to which the color filter substrate is applied.

### Brief Description of the Drawings

Fig. 1 is a schematic diagram of a color filter substrate in the prior art;
Fig. 2 is a first schematic diagram of a color filter substrate according to an embodiment of the invention;
Fig. 3 is a second schematic diagram of a color filter substrate according to an embodiment of the invention;
Fig. 4 is a flow chart of fabricating a color filter substrate according to an embodiment of the invention; and
Fig. 5 is a schematic diagram of a display panel according to an embodiment of the invention.

### Detailed Description of the Embodiments

In order to address the problems in the prior art of a low signal to noise ratio and high power consumption of an embedded touch display panel and of a poor quality of presenting a picture on the embedded touch display panel, a first insulating layer is provided between an RGB color blocking layer and a second conductive film layer in a color filter substrate in an embodiment of the invention, thereby increasing the distance between a first conductive film layer and the second conductive film layer, and this structure effectively lowers a parasitic capacitance of the color filter substrate and improves the signal to noise ratio of the embedded touch display panel, to which the color filter substrate is applied; and in a process of fabricating the color filter substrate, the first insulating layer can prevent effectively a conductive substance and a photo-resist stripping liquid from damaging the RGB color blocking layer in fabrication of the second conductive film layer, thereby eliminating a color difference, a damage, etc., of the RGB color blocking layer in the resulting color filter substrate and ensuring effectively the quality of presenting a picture on the embedded touch display panel, to which the color filter substrate is applied.

Preferred embodiments of the invention will be detailed below with reference to the drawings.

Referring to Fig. 2, a color filter substrate according to an embodiment of the invention includes a substrate 1, a first conductive film layer 3, an RGB color blocking layer 4, a first insulating layer 7 and a second conductive film layer 5, where a black matrix 2 is further included above the substrate 1. Moreover, the first conductive film layer 3 is located above the black matrix 2; the RGB color blocking layer 4 is located above the first conductive film layer 3; the first insulating layer 7 is located above the RGB color blocking layer 4; and the second conductive film layer 5 is located above the first insulating layer 7. Moreover, a first via hole 6 is provided in the RGB color blocking layer 4, and a second via hole 6' is provided in the first insulating layer 7; and the first conductive film layer 3 is electrically connected to the second conductive film layer 5 through the first via hole 6 in the RGB color blocking layer 4 and the second via hole 6' in the first insulating layer 7. Preferably, the second via hole 6' is located above the first via hole 6, and a symmetry center of the second via hole 6' is corresponded to a symmetry center of the first via hole 6. Particularly referring to Fig. 2, the first conductive film layer 3 and the second conductive film layer 5 are connected through a conductive medium in the first via hole 6 and the second via hole 6', thereby performing a touch screen function.

In the color filter substrate described above, a cross sectional area of the first via hole 6 is smaller than a cross sectional area of the second via hole 6'. Specifically, when both the first via hole 6 and the second via hole 6' are substantially circular, there is a difference of 1 to 2 micrometers between a radius of the second via hole 6' and a radius of the first via hole 6 (here regardless of an equipment error in a practical process of fabricating the color filter substrate), the cross sectional area of the first via hole 6 being smaller than the cross sectional area of the second via hole 6' can have a step formed between the first via hole 6 and the second via hole 6', so that such a problem can be avoided that the second conductive film layer 5 may easily be broken due to a large slope of a conductive substrate in the first via hole 6 and the second via hole 6' in fabrication of the second conductive film layer 5. Moreover, the thickness of the first insulating layer 7 is 1 - 3 micrometers, and a material of the first insulating layer can be an organic material, particularly a resin material with a photo-sensitive characteristic, where the resin material can be classified as per its exposure characteristic into positivity (a part thereof illuminated with light will be washed off by a developer) and negativity (a part thereof illuminated with light will be coagulated and a part thereof free of being illuminated with light will be washed off by a developer), and the organic material is at an annealing temperature below 250°C after being exposed and developed, and the organic material has a high transmissivity (>93%) and a high resistance (a body resistance is approximately 10¹⁵) and a refractive index similar to that of liquid crystal molecules (approximately 1.5), and the use of this organic material can lower effectively reflection at an interface. The first insulating layer 7 can alternatively be an inorganic material with an insulating characteristic, e.g., SiO₂, SiN₂, etc, and when the first insulating layer 7 is made of an inorganic material, the fabricated black matrix 2 and RGB color blocking layer 4 may be damaged in fabrication of the first insulating layer 7 in a high-temperate film forming process, so a low-temperature film forming process (below 250°C) needs to be used to fabricate the first insulating layer made of an inorganic material. As compared with an organic material, fabrication of the first insulating layer 7 of an inorganic material has the advantages of a low cost and a short consumed time.

With the foregoing technical solution, the first insulating layer 7 is provided between the second conductive film layer 5 and the RGB color blocking layer 4, thereby increasing the distance between the first conductive film layer 3 and the second conductive film layer 5, thus lowering effectively a parasitic capacitance between the two conductive film layers, and when an electrical signal is input to a display panel, a common (COM) electrode in an array substrate is a loading relative to the conductive film layers in the color filter substrate, while the first insulating layer 7 has the distance increased between the first conductive film layer 3 and the common electrode in the array substrate, and this increase in distance can lower the loading produced by the common electrode and further lower the parasitic capacitance; and with the foregoing technical solution, the parasitic capacitance of the embedded touch display panel, to which the color filter substrate is applied can be lowered to 50% of the parasitic capacitance of the embedded touch display panel in the prior art, thereby effectively improving a signal to noise ratio of the display panel and lowering power consumption of the display panel; moreover, the first insulating layer 7 is a layer of transparent organic substance, and the first insulating layer 7 is located above the RGB color blocking layer 4 and can play a role of isolating the conductive substance and the photo-resist striping liquid in fabrication of the second conductive film layer 5, thereby protecting effectively the RGB color blocking layer 4, avoiding the problems of a color difference and a damage of the RGB color blocking layer 4 and ensuring effectively the quality of presenting a picture on the embedded touch display panel, to which the color filter substrate is applied.

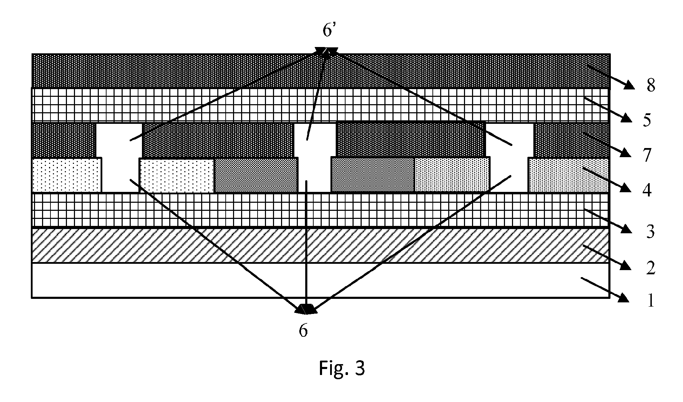

Referring to Fig. 3, preferably, a second insulating layer 8 is formed above the second conductive film layer 5. The second insulating layer 8 is located above the second conductive film layer 5, and the thickness of the second insulating layer 8 is 1 - 3 micrometers, preferably, the thickness of the second insulating layer 8 is 2 micrometers. With the foregoing preferred technical solution, since the thickness of the second conductive film layer 5 is smaller than 10% of the thickness of the second insulating layer 8, the second insulating layer 8 can play a good role of planarization, and the second insulating layer 8 can prevent the liquid crystal molecules from eroding the second conductive film layer 5 in subsequent fabrication of the display panel and play a good role of protection. Moreover, the second insulating layer 8 is made of an organic material or an inorganic material with an insulating characteristic, and the material of the first insulating layer 7 has a refractive index similar to the material of the second insulating layer 8. Preferably, the material of the first insulating layer 7 is the same as the material of the second insulating layer 8, thereby ensuring the same refractive index of the two insulating layers, thus avoiding a transmissivity from being lowered due to reflection at an interface.

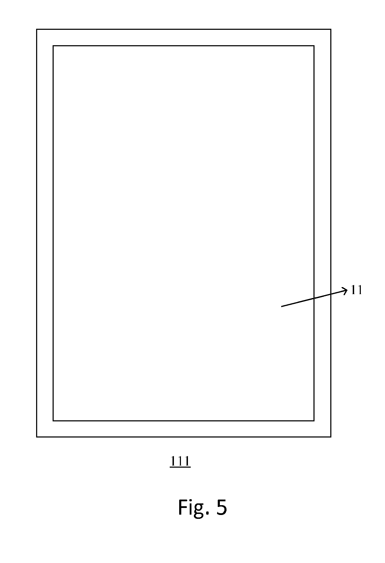

Based upon the color filter substrate described above, an embodiment of the invention further provides a display panel 111 including the color filter substrate 11 described above, as shown in Fig.5.

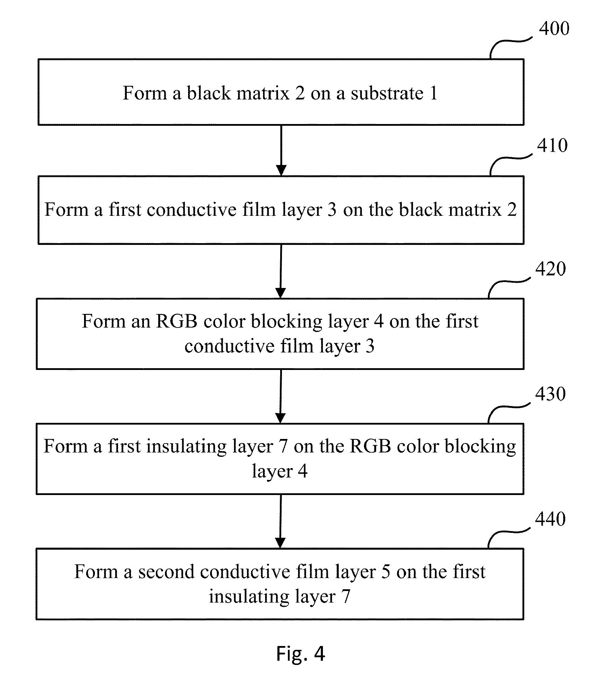

Based upon the color filter substrate described above, referring to Fig. 4, a flow of fabricating the color filter substrate according to an embodiment of the invention is as follows.

The step 400 is to form the black matrix 2 on the substrate 1.

The step 410 is to form the first conductive film layer 3 on the black matrix 2.

In an embodiment of the invention, a conductive film layer is deposited on the black matrix 2 in a film plating process, and the first conductive film layer 3 is formed from the conductive film layer in a patterning process, where the film plating process can be a sputtering process or a physical deposition process or the like.

The step 420 is to form the RGB color blocking layer 4 on the first conductive film layer 3.

In an embodiment of the invention, insulating layers in three different colors are deposited respectively on the first conductive film layer 3 in a film plating process, and the RGB color blocking layer 4 in the three colors is formed in a patterning process. The first via hole 6 is formed in the RGB color blocking layer 4.

The step 430 is to form the first insulating layer 7 on the RGB color blocking layer 4.

In an embodiment of the invention, the first insulating layer 7 is formed on the RGB color blocking layer 4 in a patterning process, and the second via hole 6' is provided in the first insulating layer 7.

The step 440 is to form the second conductive film layer 5 on the first insulating layer 7.

In an embodiment of the invention, a conductive film layer is deposited on the first insulating layer 7 in a film plating process, and the second conductive film layer 5 is formed from the conductive film layer in a patterning process, where the first conductive film layer 3 and the second conductive film layer 5 are electrically connected through the first via hole 6 and the second via hole 6', and preferably the second via hole 6' is located above the first via hole 6, a the symmetry center of the second via hole 6' is corresponded to a symmetry center of the first via hole 6.

Preferably, the second insulating layer 8 is formed on the second conductive film layer 5 in a patterning process, and the thickness of the first insulating layer 7 and the thickness of the second insulating layer 8 are 1 - 3 micrometers.

In summary, an embodiment of the invention provides a color filter substrate including a substrate 1, a first conductive film layer 3 formed on the substrate 1, an RGB color blocking layer 4 formed on the first conductive film layer 3, a first insulating layer 7 formed on the RGB color blocking layer 4, and a second conductive film layer 5 formed on the first insulating layer 7, where the first conductive film layer 3 and the second conductive film layer 5 are electrically connected through a first via hole 6 in the RGB color blocking layer 4 and a second via hole 6' in the first insulating layer 7. With the technical solution of the invention, the distance between the first conductive film layer 3 and the second conductive film layer 5 is increased, thereby effectively lowering a parasitic capacitance of the color filter substrate and improving a signal to noise ratio of an embedded touch display panel, to which the color filter substrate is applied; and in a process of fabricating the color filter substrate, the first insulating layer 7 can prevent effectively a conductive substance and a photo-resist stripping liquid from damaging the RGB color blocking layer 4 in fabrication of the second conductive film layer 5, thus eliminating a color difference, a damage, etc., of the RGB color blocking layer in the resulting color filter substrate and ensuring effectively the quality of presenting a picture on the embedded touch display panel, to which the color filter substrate is applied.

Evidently those skilled in the art can make various modifications and variations to the invention without departing from the scope of the invention. Thus the invention is also intended to encompass these modifications and variations thereto so long as the modifications and variations come into the scope of the claims appended to the invention and their equivalents.

## Claims

1. A color filter substrate, comprising:
a first substrate (1);
a first conductive film layer (3) formed on the first substrate (1);
an RGB color blocking layer (4) formed on the first conductive film layer (3), wherein a first via hole (6) is disposed in the RGB color blocking layer (4);
a first insulating layer (7) formed on the RGB color blocking layer (4), wherein a second via hole (6') is disposed in the first insulating layer (7); and
a second conductive film layer (5) formed on the first insulating layer (7), wherein the first conductive film layer (3) is electrically connected to the second conductive film layer (5) through the first via hole (6) and the second via hole (6').

2. The color filter substrate according to claim 1, wherein the first insulating layer (7) comprises an organic material.

3. The color filter substrate according to claim 1, wherein the first insulating layer (7) comprises an inorganic material.

4. The color filter substrate according to any one of claims 1 to 3, wherein a cross section area of the second via hole (6') is larger than a cross section area of the first via hole (6).

5. The color filter substrate according to any one of claims 1 to 4, wherein the color filter substrate further comprises a second insulating layer (8) formed on the second conductive film layer (5).

6. The color filter substrate according to claim 5, wherein the thickness of the first insulating layer (7) and the thickness of the second insulating layer (8) are from substantially 1 to substantially 3 micrometers.

7. A display panel, comprising the color filter substrate according to any one of claims 1 to 6.

8. A method for fabricating a color filter substrate, the method comprising:
forming (400, 410) a first conductive film layer (3) on a first substrate (1);
forming (420) an RGB color blocking layer (4) on the first conductive film layer (3), wherein a first via hole (6) is disposed in the RGB color blocking layer (4);
forming (430) a first insulating layer (7) on the RGB color blocking layer (4), wherein a second via hole (6') is disposed in the first insulating layer (7); and
forming (440) a second conductive film layer (5) on the first insulating layer (7), wherein the first conductive film layer (3) is electrically connected to the second conductive film layer (5) through the first via hole (6) and the second via hole (6').

9. The method according to claim 8, further comprising disposing a second insulating layer (8) on the second conductive film layer (5).

10. The method according to claim 9, wherein the thickness of the first insulating layer (7) and the thickness of the second insulating layer (8) are from substantially 1 to substantially 3 micrometers.
